# EUROPÄISCHE PATENTSCHRIFT

(11) **EP 4 010 798 B1**
(45) Veröffentlichungstag und Bekanntmachung des Hinweises auf die Patenterteilung: **01.10.2025**
(21) Anmeldenummer: 20753733.3
(22) Anmeldetag: 06.08.2020
(51) Int. Cl.: G06F 9/48

(54) **VERFAHREN UND AUTOMATISIERUNGSSYSTEM FÜR DIE STEUERUNG UND/ODER ÜBERWACHUNG EINER MASCHINE UND/ODER ANLAGE**
METHOD AND AUTOMATION SYSTEM FOR CONTROLLING AND/OR MONITORING A MACHINE AND/OR INSTALLATION
PROCÉDÉ ET SYSTÈME D'AUTOMATISATION PERMETTANT DE COMMANDER ET/OU DE SURVEILLER UNE MACHINE ET/OU UNE INSTALLATION

(30) Priorität: 07.08.2019 DE 102019121376
(43) Veröffentlichungstag der Anmeldung: 15.06.2022
(73) Patentinhaber: Lenze SE (Societas Europaea), 31855 Aerzen (DE)
(72) Erfinder: PAULIN, Werner, 28203 Bremen (DE)
(74) Vertreter: Freischem & Partner Patentanwälte mbB
(86) Internationale Anmeldenummer: PCT/EP2020/072161
(87) Internationale Veröffentlichungsnummer: WO 2021/023826

(56) Entgegenhaltungen:
- ANONYMOUS: "Round-robin scheduling - Wikipedia", 3 August 2019 (2019-08-03), pages 1 - 4, XP093118182, Retrieved from the Internet <URL:https://en.wikipedia.org/w/index.php?title=Round-robin_scheduling&oldid=909199349> [retrieved on 20240111]
- "Building Embedded Linux Systems", 25 August 2008, O'REILLY, ISBN: 978-0-596-52968-0, article KARIM YAGHMOUR ET AL: "Building Embedded Linux Systems, Second Edition", pages: ToC - Ch10,Ch12-, XP055496414
- IGOR KALKOV ET AL: "Predictable Broadcasting of Parallel Intents in Real-Time Android", JAVA TECHNOLOGIES FOR REAL-TIME AND EMBEDDED SYSTEMS, ACM, 2 PENN PLAZA, SUITE 701 NEW YORK NY 10121-0701 USA, 13 October 2014 (2014-10-13), pages 57 - 66, XP058059159, ISBN: 978-1-4503-2813-5, DOI: 10.1145/2661020.2661023
- PFROMMER JULIUS ET AL: "Open Source OPC UA PubSub Over TSN for Realtime Industrial Communication", 2018 IEEE 23RD INTERNATIONAL CONFERENCE ON EMERGING TECHNOLOGIES AND FACTORY AUTOMATION (ETFA), IEEE, vol. 1, 4 September 2018 (2018-09-04), pages 1087 - 1090, XP033426010, DOI: 10.1109/ETFA.2018.8502479
- ANONYMOUS: "Laufzeitumgebung - Wikipedia", 27 June 2019 (2019-06-27), XP055746476, Retrieved from the Internet <URL:https://de.wikipedia.org/w/index.php?title=Laufzeitumgebung&oldid=189905227> [retrieved on 20201103]
- ANONYMOUS: "Real-time computing - Wikipedia", 29 April 2019 (2019-04-29), XP055746443, Retrieved from the Internet <URL:https://en.wikipedia.org/w/index.php?title=Real-time_computing&oldid=894705181> [retrieved on 20201103]

## Beschreibung

Die Erfindung betrifft ein Verfahren zur Steuerung und/oder Überwachung einer Maschine oder Anlage mittels eines Automatisierungssystems sowie ein Automatisierungssystem für die Steuerung und/oder Überwachung einer Maschine und/oder Anlage.

Im Zuge der zunehmenden Automatisierung technischer Prozesse hat die Komplexität derjenigen Steuerungs- und/oder Überwachungsaufgaben, die möglichst unabhängig von der aktiven Mitwirkung des Menschen bestimmungsgemäß ablaufen müssen, immer weiter zugenommen. Die DIN IV 19233 definiert dabei die Automatisierung als das Ausrüsten einer Einrichtung, so dass sie ganz oder teilweise ohne Mitwirkung des Menschen bestimmungsgemäß arbeitet.

Insbesondere im Hinblick auf komplexe Automatisierungsaufgaben bieten Computer ein wesentliches Potential. Dieses Potential beruht insbesondere darauf, dass sich ein Computer vergleichsweise frei programmieren lässt. Hierbei bildet in der Regel ein Betriebssystem eine Schnittstelle zwischen der Computer-Hardware und den Computerprogrammen, die auf die Hardware des Computers in der Regel nicht direkt, sondern vielmehr auf durch das Betriebssystem bereitgestellte Funktionen zugreifen. Hierdurch wird erreicht, dass die Programme von der Hardware des Computers entkoppelt werden, d.h., dass sich die Entwickler der Software nicht mit der Eigenart der Hardware auseinandersetzen müssen, sondern die Software lediglich kompatibel zum jeweiligen Betriebssystem gestalten müssen. Dies hat dazu geführt, dass für handelsübliche Betriebssysteme bzw. verbreitete, frei verfügbare Betriebssysteme ein enormer Pool an kompatibler Software, also Programmen, die unter dem jeweiligen Betriebssystem lauffähig sind, zur Verfügung steht.

Die üblicherweise in Computern, wie Servern, Clients, Desktoprechnern, tragbaren Computern etc. verwendeten Betriebssysteme sind jedoch üblicherweise nicht echtzeitfähig. Für die meisten auf derartigen Computern eingesetzten Anwendungsprogramme ist dies auch nicht notwendig. Eine Komponente des Betriebssystems übernimmt die Ressourcenzuteilung. Diese Komponente eines Betriebssystems wird üblicherweise als "Scheduler" bezeichnet. Hierbei kann ein derartiges Betriebssystem auch mehrere solche Scheduler aufweisen, die unterschiedliche Ressourcen des Computers verwalten. Scheduler verwalten in diesem Zusammenhang Prozesse und deren Abarbeitung. Hierbei können beispielsweise zeitscheibengetriebene und/oder prioritätsgetriebene Scheduling-Verfahren zum Einsatz kommen. Die Scheduler legen hierbei insbesondere die Reihenfolge fest, in der einzelne Programme auf die jeweilige Hardware-Ressource zugreifen können. Bei der jeweiligen Hardware-Ressource kann es sich um einen Prozessor, einen Prozessor-Kern, um einen Speicher, eine Festplatte, einen Ein- und Ausgangspuffer einer Netzwerkkarte etc. handeln.

Derartige Computer mit konventionellen Betriebssystemen sind jedoch für Automatisierungsaufgaben nur eingeschränkt nutzbar, da außerhalb der Automatisierungstechnik verbreitete Betriebssysteme in der Regel nicht in der Lage sind, Echtzeitanforderungen von Programmen, die auf dem Betriebssystem ausgeführt werden, im Zusammenhang mit Automatisierungssystemen zu erfüllen. Programme aus dem Bereich der Automatisierungstechnik stellen jedoch häufig Echtzeitanforderungen, beispielsweise weil ein bestimmtes Programm einen bestimmten Aktor zu Steuerungszwecken ansteuert. Wenn dieser nun einen Steuerungsbefehl zu spät erhält und entsprechend zu spät anspricht, kann sich dies fatal auf den laufenden Betrieb einer Maschine oder Anlage auswirken.

Daher haben sich auf dem Gebiet der Automatisierungstechnik eigene technische Lösungen entwickelt. Häufig handelt es sich um Echtzeit-Betriebssysteme, die in eingebetteten Computern in speicherprogrammierbaren Steuerungen laufen. Derartige Echtzeit-Betriebssysteme sind jedoch in der Regel sehr spezialisierte und zudem überwiegend proprietäre Systeme, für die außer den Programmen für die Automatisierungsfunktion praktisch keine Software zur Verfügung steht. Dies betrifft insbesondere typische Standard-Software, wie sie für Standard-Betriebssysteme wie Windows oder Linux, zur Verfügung steht. Die sind auf diesen proprietären Systemen regelmäßig nicht lauffähig. Darüber hinaus ergibt sich eine Inkompatibilität, da auf diesen proprietären Systemen entsprechende proprietäre Bibliotheken verwendet werden, deren Betriebssystem-Aufrufe ebenfalls proprietär sind. Der Aufwand, den es entsprechend mit sich bringen würde, "Standard-Software" für jeden speziellen Typ eines solchen proprietären Systems zur Verfügung zu stellen, ist schlicht zu hoch, so dass in der Praxis nur ein sehr eingeschränkter Software-Pool für diese Systeme zur Verfügung steht.

Auch sind derartige Echtzeit-Systeme hinsichtlich ihrer Software-Architektur auf die Abarbeitung von entsprechend programmierten Echtzeit-Programmen hin optimiert. Programme, die für den nicht zyklischen, eventorientierten Betrieb geschrieben sind, können von solchen Systemen nicht oder nur mit Schwierigkeiten abgearbeitet werden. Dies betrifft insbesondere Situationen, in denen sich Echtzeit- und Nicht-Echtzeit-Programme gemeinsame Ressourcen teilen.

Um nun die Funktionen üblicher - nicht echtzeitfähiger - Computer mit den Möglichkeiten der echtzeitfähigen Systeme aus der Automatisierungstechnik zu kombinieren, haben sich Ansätze etabliert. So wird beispielsweise als Zwischenschicht zwischen der Computer-Hardware und dem Betriebssystem ein sogenannter Hypervisor eingesetzt. Bei einer derartigen Architektur können ein echtzeitfähiges und ein nicht echtzeitfähiges Betriebssystem parallel betrieben werden. Der Hypervisor sorgt dabei dafür, dass die Hardware-Ressourcen durch ein permanentes "Hin- und Herschalten" zwischen den Betriebssystemen aufgeteilt werden.

Nachteilig an der Verwendung eines solchen Hypervisor ist jedoch, dass diese hoch hardware-spezifisch sind. Wird ein solcher Hypervisor, beispielsweise für eine bestimmte speicherprogrammierbare Steuerung eingesetzt, so muss dieser immer an die jeweilige Hardware angepasst werden. Hierdurch entsteht die unerwünschte Abhängigkeit zwischen Hardware und Software zwischen der Hardware und dem Hypervisor.

Weiterhin trennt der Hypervisor das echtzeitfähige Betriebssystem und das nicht-echtzeitfähige Betriebssystem äußerst strikt voneinander. Eine Kommunikation von Programmen, die auf dem echtzeitfähigen Betriebssystem ablaufen, mit Programmen, die auf dem nicht echtzeitfähigen Betriebssystem ablaufen, wird hierdurch wesentlich erschwert.

Die so entstehenden Systeme sind daher oftmals hoch spezialisiert und lediglich für bestimmte Hardware verfügbar bzw. mit dieser kompatibel. Der vorstehend beschriebene Vorteil der Computertechnik, nämlich die "Offenheit" des Systems für Erweiterungen durch neue Programme und die entstehende Unabhängigkeit von der verwendeten Hardware fallen dadurch weg oder stören die Echtzeitfähigkeit.

Um sich zu behelfen wird oftmals ein übliches und "offenes" Betriebssystem eingesetzt, das über eine entsprechende Echtzeitfähigkeit verfügt bzw. das mittels geeigneter Erweiterungen echtzeitfähig gemacht wurde.. Bei diesem kann es sich beispielsweise um ein Linux-System handeln. Um die "Offenheit" des Systems herzustellen, also dem Anwender Möglichkeiten zu bieten, die Funktionalität des Systems an seine Bedürfnisse anzupassen, wird dem Anwender dabei häufig die Möglichkeit eingeräumt, auf das System mit einer sogenannten "Root-Berechtigung" zuzugreifen, d.h., er kann weitreichende Änderungen an dem System vornehmen.

Durch diesen Einsatz der Root-Berechtigung entstehen gravierende Nachteile. Zum einen entsteht eine große Sicherheitslücke, da durch diese Berechtigung umfassende Rechte erlangt werden. Weiterhin kann das Echtzeitverhalten destabilisiert werden, da einzelne Pakete unkontrolliert Ressourcen, wie beispielsweise Speicherplatz und Rechenzeit, für sich beanspruchen. Zudem ist das nötige Wissen, um derartige Kernel-nahe Eingriffe an einem Betriebssystem vorzunehmen, nicht derart weit verbreitet, dass der Anwender derartige Eingriffe nur mit großem Aufwand und entsprechenden Risiken durch Fehler bei diesen Eingriffen vornehmen kann. Auch das Lifecycle-Management der Software (Updates, Security Patches etc.) wird durch derartige Eingriffe erschwert bzw. praktisch unmöglich gemacht. Schlussendlich stellt aber ein derartiges System insbesondere lediglich eine Koexistenz von Echtzeit-Programmen und nicht Echtzeit-Programmen dar. Es findet jedoch keine Abstimmung von Echtzeit- und nicht Echtzeit-Elementen, insbesondere zur Ermöglichung eines stabilen Echtzeitbetriebs bei gleichzeitigem Betrieb von nicht Echtzeit-Programmen, statt.

KarimYaghmour ET AL: "Building Embedded Linux Systems, Second Edition" und IGOR KALKOV ET AL: "Predictable Broadcasting of Parallel Intents in Real-Time Android" offenbaren Betriebsyssteme (Linux und Anrdoid) bei welchen die Echtzeitfähikeit durch ein Echtzeitpatch implementiert wird und welches die Ausführung von Echtzeit- und nicht Echtzeit-Programmen erlaubt.

Der Erfindung liegt daher die Aufgabe zugrunde, ein Verfahren und ein Automatisierungssystem aufzuzeigen, bei dem die vorstehend beschriebenen Nachteile nicht oder zumindest in geringerem Umfang auftreten.

Die Aufgabe wird gelöst durch ein Verfahren und ein Automatisierungssystem mit den Merkmalen der unabhängigen Ansprüche. Die Merkmale der abhängigen Ansprüche betreffen vorteilhafte Ausführungsformen.

Das Verfahren sieht vor, dass Funktionen des Automatisierungssystems mittels eines Computers gesteuert werden. Die Steuerung erfolgt hierbei durch Programme, die auf dem Computer ausgeführt werden. Der Computer weist hierfür ein echtzeitfähiges Betriebssystem auf. Bei dem echtzeitfähigen Betriebssystem kann es sich insbesondere um ein echtzeitfähiges Linux-Betriebssystem handeln. Ein derartiges Betriebssystem, ein Linux mit einer entsprechenden Erweiterung für die Echtzeitfähigkeit (preemptive-RT-Patch bzw. PREEMPT_RT Patch), ist insbesondere unter der Bezeichnung "Linux RT" bekannt. Das Verfahren sieht vor, dass die Programme, die sowohl Echtzeitprogramme, als auch nicht-Echtzeitprogramme umfassen, in einer dem Betriebssystem übergeordneten Laufzeitumgebung ausgeführt werden. Es hat sich gezeigt, dass durch den Einsatz einer derartigen Laufzeitumgebung, insbesondere als zwischen den Programmen und dem Betriebssystem liegende Schicht in der dem Verfahren zugrunde liegenden Software-Architektur, die gleichzeitige Ausführung von Echtzeitprogrammen sowie nicht-Echtzeitprogrammen ermöglicht, wobei zum einen eine hohe Stabilität und Sicherheit des Verfahrens gewährleistet werden können. Darüber hinaus lässt sich auf Softwareebene ein hoher Grad an Modularität erreichen, die für die Durchführung des Verfahrens genutzte Software anzupassen und/oder zu erweitern.

Insbesondere erfolgt eine Zuteilung der Ressourcen des Computers derart, dass sichergestellt ist, dass den Echtzeitprogrammen hinreichende Ressourcen für die Erfüllung der jeweiligen Echtzeitanforderungen zur Verfügung stehen. Insbesondere wird durch die Laufzeitumgebung die Priorität der Abarbeitung der Programme festgelegt. Hierbei werden die Echtzeit-Programme insbesondere durch die Laufzeitumgebung zyklischen Zeitscheiben zugewiesen, die in Echtzeit abgearbeitet werden. Insbesondere werden durch die Laufzeitumgebung geeignete Zeitpunkte ermittelt, zu denen die Abarbeitung der nicht Echtzeit-Anwendungen erfolgen kann, ohne die Abarbeitung der Echtzeit-Programme in Echtzeit zu beeinträchtigen. Die Programme werden durch die Laufzeitumgebung insbesondere mit die Priorität der Abarbeitung betreffenden Anweisungen an das Betriebssystem zur Abarbeitung übergeben. Insbesondere stellt die Laufzeitumgebung dabei sicher, dass eine den jeweiligen Echtzeitanforderungen entsprechende Ausführung der Echtzeitprogramme nicht durch die nicht-Echtzeitprogramme beeinträchtigt wird.

Insbesondere werden die Programme in Sandboxen ausgeführt. Dabei wird vorzugsweise jedes Programm in einer eigenen Sandbox ausgeführt. Das Ausführen in Sandboxen bedeutet, dass das jeweilige Programm vom Rest des Systems abgeschirmt wird. Hierdurch wird verhindert, dass bei Fehlern im Ablauf eines einzigen Programms, beispielsweise eine illegale Operation, wie beispielsweise eine Division durch Null, ein unerlaubter Speicherzugriff, ein Stack-Fehler, etc. kein negativer Einfluss auf das Gesamtsystem oder andere Programme ausgeübt wird. Dies ist insbesondere im Hinblick auf die Echtzeit-Anforderungen, die erfüllt werden müssen, von wesentlicher Bedeutung.

Es ist möglich, dass jedes Programm in einer eigenen Sandbox ausgeführt wird. Alternativ und/oder ergänzend kann eine Mehrzahl Programme in einer gemeinsamen Sandbox ausgeführt werden. Dabei können die Programme durch die Laufzeitumgebung in Abhängigkeit von definierten Bedingungen den Sandboxen zugewiesen werden. Bei diesen Bedingungen kann es sich insbesondere um Speicherbedarf, Rechenleistungsbedarf und/oder Echtzeitverhalten handeln.

Insbesondere bedeutet das Ausführen in einer Sandbox, dass die Programme keine gemeinsamen bzw. globalen Variablen nutzen. Dadurch wird verhindert, dass sich ein fehlerhafter Umgang mit dieser Variablen durch ein Programm negativ auf den Ablauf eines anderen Programms auswirkt.

Weiterhin bedeutet das Ausführen in einer Sandbox insbesondere, dass keine Programme auf gemeinsam genutzte Bereiche des Speichers zugreifen. Dies betrifft insbesondere die Nutzung des Arbeitsspeichers.

Darüber hinaus kann das Verfahren vorsehen, dass die Programme nicht auf gemeinsame Programmbestandteile zurückgreifen. Bei diesen gemeinsamen Programmbestandteilen kann es sich insbesondere um Software-Bibliotheken, sogenannte "Libraries" handeln. Durch einen derartigen, gemeinsam genutzten Programmbestandteil entsteht eine Abhängigkeit der Programme untereinander. Die Nutzung eines derartigen gemeinsamen Programmbestandteils bringt zwar den Vorteil mit sich, dass dieser Programmbestandteil lediglich einmal auf dem entsprechenden Computer gespeichert werden muss, wo er dann von allen diesen gemeinsamen Programmbestandteil nutzenden Programmen abgerufen werden kann, der Nachteil ist jedoch, dass Versionsänderungen des einen Programms, welche gegebenenfalls auch eine Versionsänderung des gemeinsamen Programmbestandteils bedingen, wiederum zu Inkompatibilität mit einem Programm, welches ebenfalls den gemeinsamen Programmbestandteil nutzt, führen können. Durch das Vermeiden gemeinsamer Programmbestandteile wird eine Modularität gewährleistet, die den Austausch einzelner Programme erlaubt, ohne andere Programme dabei zu beeinträchtigen. Hierbei ist es grundsätzlich möglich, dass unterschiedliche Programme identische Programmbestandteile verwenden. Diese werden dann jedoch insbesondere für jedes Programm, das den jeweiligen Programmbestandteil verwendet, separat auf einem nicht-flüchtigen Datenträger gespeichert. Mit anderen Worten bedeutet dies, dass Programmbestandteile, die von einer Mehrzahl Programme benutzt werden, in einer Mehrzahl Kopien auf einem nicht-flüchtigen Speicher gespeichert werden. Insbesondere wird dabei auf jede Kopie des Programmbestandteils lediglich durch ein bestimmtes Programm zugegriffen. Jedes Programm, das diesen Programmbestandteil nutzt, greift dann lediglich auf "seine eigene Kopie" des jeweiligen Programmbestandteils zu. Mit anderen Worten greifen Programme insbesondere nicht zur Nutzung gemeinsamer Programmbestandteile durch eine Mehrzahl Programme gemeinsam auf den gleichen Speicherbereich eines nicht-flüchtigen Speichers zu.

Insbesondere kann die Laufzeitumgebung verhindern, dass Root-Zugriffe durch die Programme erfolgen. Hierdurch wird die Systemsicherheit erhöht. Darüber hinaus kann die Laufzeitumgebung sämtliche Zugriffe der Programme auf Funktionen des der Laufzeitumgebung untergeordneten echtzeitfähigen Betriebssystems überwachen, verhindern und/oder freigeben. Darüber hinaus kann die Laufzeitumgebung insbesondere die Kommunikation der Programme untereinander und/oder mit Gegenstellen außerhalb der Laufzeitumgebung, beispielsweise Peripheriegeräten steuern, überwachen, verhindern und/oder freigeben. Hierdurch wird die Sicherheit des Systems erhöht. Insbesondere können Angriffe durch Schadsoftware, die in einzelnen Programmen "versteckt" in das System eingeschleust wird, erschwert oder sogar verhindert werden.

Insbesondere kontrolliert die Laufzeitumgebung die Kommunikation der Programme untereinander. Die Kommunikation der Programme untereinander erfolgt insbesondere durch ein Message-Passing-System. Die Laufzeitumgebung übernimmt dabei insbesondere die Rolle einer Message Oriented Middleware bzw. stellt eine solche für die Programme zur Verfügung. Die kontrollierte Kommunikation der Programme untereinander ermöglicht es, durch die Laufzeitumgebung sicherzustellen, dass die einzelnen, insbesondere in ihren jeweiligen Sandboxen ausgeführten Programme sich nicht negativ gegenseitig beeinflussen. Hierüber kann auch eine hohe Sicherheit und Modularität des Systems gewährleistet werden. Die Kommunikation der Programme untereinander im Wege des Message Passing ermöglicht es insbesondere, einzelne Programme weitgehend unabhängig voneinander auszuführen. Darüber hinaus können Programme unabhängig voneinander erweitert, aktualisiert, hinzugefügt und/oder entfernt werden. Hierdurch wird die Modularität des Automatisierungssystems, insbesondere auf Softwareebene, verbessert. So erlaubt das Message Passing beispielsweise einen Zeitverzug zwischen dem Senden und Empfangen der Message. Wird beispielsweise eine Funktion eines anderen Programms von einem Programm aufgerufen, so kann das Programm die Antwort des anderen Programms über einen vergleichsweise längeren Zeitraum "abwarten". Dies erhöht die Flexibilität bei der Ressourcenaufteilung auf die jeweils in den einzelnen Sandboxen laufenden Programme. Darüber hinaus muss lediglich der Inhalt der "Message" vom Empfänger verstanden werden. Insbesondere rufen die einzelnen Programme, die in der Laufzeitumgebung ausgeführt werden, keine Funktionen anderer, in der Laufzeitumgebung ausgeführter Programme, direkt auf und/oder greifen nicht auf den von anderen Programmen belegten Speicher zurück. Dadurch wird die Unabhängigkeit der Programme untereinander und damit die Modularität der Software des Automatisierungssystems verbessert.

Die Kommunikation der Programme untereinander kann insbesondere nach einem Publish-Subscribe-Messaging Pattern erfolgen. Der große Vorteil eines derartigen Publish-Subscribe.Messaging-Patterns ist es, dass der Sender nicht wissen muss, wer alles Empfänger der Nachricht sein soll. Andererseits ist beispielsweise im Vergleich mit einem Broadcast bzw. einem Nachrichtenverteilungssystem, bei dem die Nachricht letztendlich an alle infrage kommenden Empfänger weitergeleitet würde, durch den Publish-Subscribe-Messaging-Pattern eine Reduzierung der Systemlast gegeben, da die einzelnen "Messages" nur von denjenigen Adressaten empfangen werden, an die die jeweilige "Message" auch gerichtet ist (Subscribers).

Alternativ und/oder ergänzend kann für die Kommunikation der Programme untereinander beispielsweise auch eine andere Kommunikationsstruktur, beispielsweise OPC UA zum Einsatz kommen.

Vorteilhafterweise kann ein Nano-Messaging-System wie zum Beispiel NanoMSG NNG für die Kommunikation der Programme untereinander verwendet werden. Diese sind insbesondere vorteilhaft im Hinblick auf ihren vergleichsweise niedrigen Systemressourcenbedarf. Der Vorteil von OPC UA ist, dass es sich um einen einheitlichen, herstellerübergreifenden und offenen Standard handelt.

Darüber hinaus kann das Verfahren die Kommunikation zwischen den Programmen und Peripheriegeräten, beispielsweise Aktoren oder Sensoren, vorsehen. Die Kommunikation kann beispielsweise über eine serviceorientierte Kommunikationsstruktur erfolgen. Bei dieser kann es sich beispielsweise um OPC UA handeln. Insbesondere kann eine echtzeitfähige Version von OPC UA, z.B. die Version OPC UA-TSN zur Anwendung kommen. Die Kommunikation zwischen den Programmen und Peripheriegeräten wird insbesondere durch die Laufzeitumgebung kontrolliert. Dabei erfolgt durch die Laufzeitumgebung insbesondere die Vermittlung der Kommunikation zwischen den einzelnen Programmen und dem Betriebssystem. Das Betriebssystem übernimmt insbesondere die Vermittlung der Kommunikation zwischen der Laufzeitumgebung und der Hardware.

Es ist möglich, dass von einem Computersystem über eine Datenverbindung Programme, die in der Laufzeitumgebung ausgeführt werden können, bereitgestellt werden. Dies ermöglicht es in einfacher Weise, beispielsweise über das Internet, neue Programme auf den zur Ausführung des Verfahrens dienenden Computer zu übertragen und dessen Einsatzmöglichkeiten zu erweitern. Die Programme können beispielsweise durch das Computersystem nach Art eines Software-Stores zur Verfügung gestellt werden.

Das Verfahren kann vorsehen, dass eine integrierte Entwicklungsumgebung bereitgestellt wird, die die Erstellung von in der Laufzeitumgebung ausführbaren Programmen unterstützt.

Das Verfahren kann vorsehen, dass, insbesondere durch die Laufzeitumgebung, eine Verwaltung der Programme erfolgt. Dies betrifft insbesondere Programme, die von einem Computersystem über eine Datenverbindung zur Verfügung gestellt werden. Die Laufzeitumgebung kann insbesondere eine Paketverwaltung bereitstellen, die Softwarepakete verwaltet, die die entsprechenden Programme beinhalten. Dabei werden die Programme und/oder Softwarepakete insbesondere durch die Laufzeitumgebung, insbesondere die Paketverwaltung, von einem Computersystem über eine Datenverbindung und/oder von einer Entwicklungsumgebung in Empfang genommen. Insbesondere werden durch die Laufzeitumgebung, insbesondere die Paketverwaltung, den Programmen Sandboxen zugewiesen. Insbesondere kann auch die Abarbeitung der Programme durch die Laufzeitumgebung, insbesondere die Paketverwaltung, gestartet werden. Die Programme werden dabei durch die Paketverwaltung insbesondere im ausführbaren Zustand in Empfang genommen, insbesondere wobei die Programme als Pakete in Empfang genommen werden, die sowohl den ausführbaren Programmcode als auch Konfigurationsdaten und/oder Bibliotheken enthalten. Dabei werden die Programme insbesondere derart auf einem Datenträger des Computers gespeichert, dass sowohl Programmcode als auch Konfigurationsdaten des Programms getrennt von anderer Software auf dem Datenträger gespeichert sind.

Bei den Echtzeit-Programmen kann es sich insbesondere um Programme zur Steuerung eines elektrischen Antriebssystems und oder eine Mehrzahl elektrischer Antriebssysteme handeln. Elektrische Antriebssysteme sind typische Bestandteile von Maschinen und/oder Anlagen, bei deren Steuerung aufgrund der hohen Arbeitsgeschwindigkeiten moderner Maschinen und oder Anlagen vergleichsweise hohe Anforderungen an die Echtzeitfähigkeit bestehen. Andererseits erfordern hochautomatisierte Maschinen und/oder Anlagen regelmäßig eine genaue Abstimmung der Bewegungen einer Mehrzahl (oder gar Vielzahl) angetriebener Achsen aufeinander.

Entsprechend kann wenigstens eines der Echtzeit-Programme bei der Ausführung des Verfahrens die Bewegung, Bewegungsgeschwindigkeit und/oder Position eines elektrischen Antriebssystems steuern. Die Steuerung kann insbesondere mittels eines durch den Computer angesteuerten Frequenzumrichters des Antriebssystems erfolgen. Bei der Bewegungsgeschwindigkeit kann es sich insbesondere um eine Drehzahl und/oder Winkelgeschwindigkeit einer angetriebenen Achse des Antriebssystems handeln. Bei der Position kann es sich insbesondere um eine von einer Achse des Antriebssystems einzunehmende Winkelposition und/oder bei der Bewegung insbesondere um einen durch eine Drehung einer Achse des Antriebssystems zurückzulegenden Winkelbereich handeln.

Alternativ und/oder ergänzend kann wenigstens eines der Echtzeit-Programme bei der Ausführung des Verfahrens Positionen, Bewegungen und/oder Bewegungsgeschwindigkeiten einer Mehrzahl durch elektrische Antriebssysteme angetriebener Achsen aufeinander abstimmen. Dabei kann es sich um Achsen der gleichen Maschine und/oder Anlage handeln.

Alternativ und/oder ergänzend ist es jedoch auch denkbar, dass wenigstens eines der Echtzeit-Programme bei der Ausführung des Verfahrens Positionen, Bewegungen und/oder Bewegungsgeschwindigkeiten angetriebener Achsen unterschiedlicher Maschinen und/oder Anlagen aufeinander abgestimmt. So ist beispielsweise ein Szenario denkbar, dass ein Roboter Werkstücke von einem Förderband abnimmt und an bestimmten Positionen ablegt. In einem derartigen Fall kann ein Programm die Bewegungen der angetriebenen Achsen des Förderbands und die Bewegungen der angetriebenen Achsen des Roboters aufeinander abstimmen.

Es versteht sich, dass alternativ und/oder ergänzend grundsätzlich wenigstens eines der Echtzeit-Programme bei der Ausführung des Verfahrens Positionen, Bewegungen und/oder Bewegungsgeschwindigkeiten wenigstens einer durch ein elektrisches Antriebssystem angetriebenen Achse unter Berücksichtigung wenigstens eines beliebigen Peripheriegerätes ansteuern kann, insbesondere die Steuerung von Positionen, Bewegungen und/oder Bewegungsgeschwindigkeiten mit einer Aktion eines Aktors abstimmen und/oder Positionen, Bewegungen und/oder Bewegungsgeschwindigkeiten in Abhängigkeit eines Signals eines Sensors ansteuern kann.

Das Automatisierungssystem für eine Maschine oder Anlage, welches insbesondere dazu ausgebildet ist, ein vorstehend beschriebenes Verfahren auszuführen, weist eine Mehrzahl über Datenverbindungen mit einem Computer verbundene Peripheriegeräte auf. Bei den Peripheriegeräten kann es sich insbesondere um alle Arten von Feldgeräten, insbesondere Sensoren und/oder Aktoren, handeln. Die Peripheriegeräte dienen zur Ausführung von Automatisierungsfunktionen, wie beispielsweise Antriebsfunktionen eines Motors, insbesondere Beschleunigung und Verzögerung. Bei dem Peripheriegerät kann es sich in diesem Fall um eine Motorsteuerung, beispielsweise mittels eines Frequenzumrichters, handeln. Die Peripheriegeräte können aber auch beliebige andere Sensoren und/oder Aktoren sein, die dazu dienen, ein Positionierungsprofil eines Pick-and-Place-Roboters, beispielsweise eines Roboters mit Delta-Kinematik, zu realisieren. Bei den Automatisierungsfunktionen kann es sich auch um Tracking-Management-Funktionen handeln, beispielsweise die visuelle Verfolgung von Werkstücken. **In** diesem Zusammenhang kann es sich bei dem Peripheriegerät beispielsweise um eine Kamera handeln. Der Computer weist ein echtzeitfähiges Betriebssystem, insbesondere ein echtzeitfähiges Linux-Betriebssystem auf. Ferner weist das Automatisierungssystem Programme zur Steuerung der Ausführung der Automatisierungsfunktionen durch die Peripheriegeräte auf, die in einer dem Betriebssystem übergeordneten Laufzeitumgebung ausführbar sind. Dabei umfassen die Programme sowohl Echtzeitprogramme, als auch nicht-Echtzeitprogramme.

Das Automatisierungssystem kann Identifikationsmodule umfassen, die über eine Datenverbindung mit dem Computer verbindbar sind und die für eine bestimmte Maschine, Anlage und/oder ein bestimmtes Peripheriegerät benötigten Programme identifizieren. So können die Identifikationsmodule beispielsweise Speicherbausteine aufweisen, in denen Anweisungen gespeichert sind, die bewirken, dass ein bestimmtes Programm zunächst von einem Computersystem über eine Datenverbindung bezogen und dann in der Laufzeitumgebung ausgeführt wird. Auf diese Weise lässt sich insbesondere ein Art "Plug-and-Play"-Funktion realisieren, bei der lediglich eine Identifizierung der benötigten Software durch Identifikationsmodule erfolgen muss. Die Identifikationsmodule sind der Maschine, Anlage und/oder dem Peripheriegerät zugeordnet. Insbesondere sind sie Bestandteil der Maschine, Anlage und/oder des Peripheriegeräts. Wird die Anlage, Maschine und/oder das Peripheriegerät via Datenleitung in das Automatisierungssystem eingebunden, so erfolgt in diesem Zusammenhang insbesondere auch die Einbindung des jeweiligen Identifikationsmoduls in das Automatisierungssystem. Durch die Einbindung über die Datenleitung wird insbesondere die Kommunikation zwischen Laufzeitumgebung und Identifikationsmodul ermöglicht.

Alternativ und/oder ergänzend können in den Speicherbausteinen der Identifikationsmodule auch Programme und/oder Konfigurationsdateien eingebunden sein, die insbesondere spezifisch für die jeweilige Maschine, Anlage und/oder das jeweilige Peripheriegerät sind. Bei dieser Variante liefert die Maschine, Anlage und/oder das Peripheriegerät bei der Einbindung in das Automatisierungssystem die für den Betrieb der Maschine, Anlage und/oder des Peripheriegeräts benötigte Software direkt an die Laufzeitumgebung. Es versteht sich, dass auch Mischformen hinsichtlich der Gestaltung der vorstehend beschriebenen Identifikationsmodule möglich sind. Beispielsweise kann eine "Basisversion" der Software mitgeliefert werden und eine Datenverbindung genutzt werden, um gegebenenfalls Aktualisierungen und/oder Erweiterungen, die beispielsweise erst zu einem späteren Zeitpunkt zur Verfügung gestellt werden, über eine Datenverbindung von einem Computersystem zu beziehen.

Das Automatisierungssystem kann Peripheriegeräte einer Mehrzahl Maschinen umfassen. Der Vorteil des Automatisierungssystems ist es in diesem Zusammenhang insbesondere, dass das System skalierbar ist. Solange genug Ressourcen auf dem Computer zur Verfügung stehen, um einen reibungslosen Ablauf, insbesondere der Echtzeitprogramme, zu gewährleisten, können theoretisch beliebig viele Peripheriegeräte beliebig vieler Maschinen und/oder Anlagen von einem Computer gesteuert und/oder überwacht werden. Auch ist die Zuordnung zwischen den Computern und den Maschinen, Anlagen und/oder Peripheriegeräten flexibel, d.h., sie kann mit geringfügigem Aufwand geändert werden, beispielsweise ist es jederzeit möglich, einem Computer nachträglich weitere Maschinen, Anlagen und/oder Peripheriegeräte zuzuordnen, die dann ebenfalls mittels dieses Computers gesteuert und/oder überwacht werden. Ebenfalls kann eine Maschine, Anlage und/oder ein Peripheriegerät, das mittels eines ersten Computers gesteuert und/oder überwacht wird, nachträglich statt dem ersten Computer, einem anderen Computer zugeordnet werden, mittels dem danach die Steuerung und/oder Überwachung dieser Maschine, Anlage und/oder dieses Peripheriegeräts erfolgt. Dies stellt gegenüber dem bisherigen Stand der Technik, bei dem eine entsprechende Steuerungs- und/oder Überwachungseinheit, wie beispielsweise eine speicherprogrammierbare Steuerung, einer Maschine, Anlage und/oder einem Peripheriegerät fest zugeordnet war und diese Zuordnung nachträglich kaum oder lediglich mit sehr hohem Aufwand geändert werden konnte, einen erheblichen Fortschritt dar.

Da der Computer lediglich kompatibel mit dem der Laufzeitumgebung untergeordneten Betriebssystem sein muss, kann für den Computer vergleichsweise kostengünstige Standard-Hardware, wie ein Industrie-PC oder gar ein gewöhnlicher PC, verwendet werden. Es kann eine entsprechend große Zahl an Peripheriegeräten automatisiert und damit die Automatisierung auch großer komplexer Fertigungsanlagen von einem einzigen zentralen Computer aus gesteuert und/oder überwacht werden. Sollten die Ressourcen eines Computers nicht ausreichen, kann eine Mehrzahl Computer eingesetzt werden, um beispielsweise einen komplexen Produktionsprozess, wie eine ganze Fabrik, zu steuern. Hierbei können einzelne Anlagen und/oder Maschinen bzw. deren mit dem Computer zu verbindende Peripheriegeräte auf die Computer aufgeteilt werden, so dass die einzelnen Computer hinsichtlich der benötigten Ressourcen sinnvoll ausgelastet werden können. Die bisher übliche Vielzahl dezentraler Steuerungseinheiten kann auf diese Weise entfallen, wodurch sich Kosteneinsparungen insbesondere durch die vereinfachte Wartung des gesamten Systems erzielen und dadurch die Kosten über den Lebenszyklus gesenkt werden können.

Weitere praktische Ausführungsformen und Vorteile der Erfindung sind nachfolgend im Zusammenhang mit den Zeichnungen beschrieben. Es zeigen:
- Fig. 1: eine schematische Darstellung einer Software-Architektur eines Computers eines Automatisierungssystems nach dem Stand der Technik,
- Fig. 2: eine schematische Darstellung der Software-Architektur eines Computers eines beispielhaften Automatisierungssystems nach der vorliegenden Erfindung,
- Fig. 3: eine schematische Darstellung der Funktionsweise eines beispielhaften Automatisierungssystems nach der vorliegenden Erfindung,
- Fig. 4: die Funktionsweise eines beispielhaften Automatisierungssystems nach der vorliegenden Erfindung zur Steuerung und/oder Überwachung einer Mehrzahl Maschinen und/oder Anlagen.

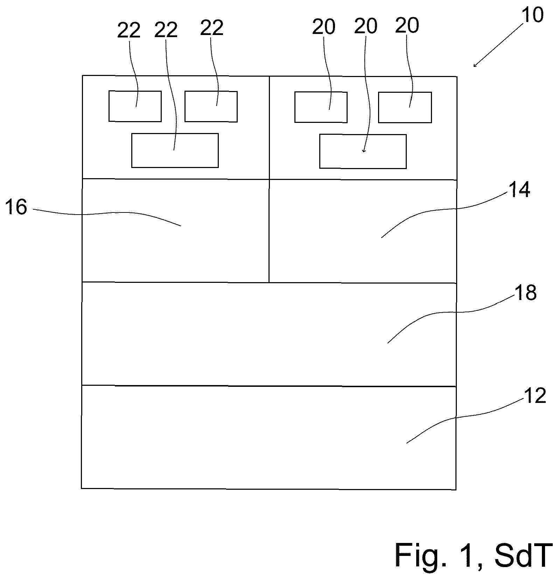

In Figur 1 ist beispielhaft eine Software-Architektur eines Computers 10 eines Automatisierungssystems nach dem Stand der Technik dargestellt. Zwischen der Hardwareschicht 12 und eine Schicht, die durch ein echtzeitfähiges Betriebssystem 14 und ein nicht echtzeitfähiges Betriebssystem 16 gebildet wird, ist als weitere Schicht der Software-Architektur ein Hypervisor 18 vorgesehen. Der Hypervisor 18 sorgt durch ein permanentes "Hin-und Herschalten" dafür, dass die Ressourcen der Hardware 12 zwischen dem echtzeitfähigen Betriebssystem 14 und dem nicht echtzeitfähigen Betriebssystem 16 aufgeteilt werden.

Als nicht echtzeitfähiges Betriebssystem 16 können bei einer derartigen Software-Architektur handelsübliche Betriebssysteme wie Windows oder Linux zum Einsatz kommen. Bei dem echtzeitfähigen Betriebssystem 14 handelt es sich in der Regel um spezialisierte Betriebssysteme, welche die Abarbeitung der Echtzeitprogramme 20 in der dem echtzeitfähigen Betriebssystem 14 überlagerten Anwendungsschicht ermöglichen. Entsprechend ermöglicht das nicht echtzeitfähige Betriebssystem 16 die Ausführung von nicht-Echtzeitprogrammen 22, die hierdurch mit den Echtzeitprogrammen 20 auf dem gleichen Computer 10 ausgeführt werden können.

Zwar stellt der Hypervisor 18 die Hardware 12 des Computers 10 je nach Bedarf jeweils einem der Systeme zur Verfügung, aus Sicht des Nutzers ergibt sich zumindest eine scheinbar simultane Nutzbarkeit des Computers 10 für Echtzeitprogramme 20, die insbesondere der Steuerung und/oder Überwachung einer Maschine und/oder einer Anlage dienen können, und nicht-Echtzeitprogramme 22, bei denen es sich beispielsweise um CAD-Anwendungen, Programme zur Erzeugung von Dokumenten wie beispielsweise PDF-Generatoren, Programme für die Dokumentation, wie beispielsweise ein elektronisches Maschinen- oder Anlagenlogbuch, handeln kann. Insbesondere die nicht-Echtzeitanwendungen 22 stehen typischerweise für handelsübliche, nicht echtzeitfähige Betriebssysteme wie beispielsweise Windows, zur Verfügung. Die Verwendung eines Hypervisors 18 ermöglicht es so, derartige Software in einfacher Weise in die ansonsten sehr spezialisierte Infrastruktur der nach dem Stand der Technik üblichen speicherprogrammierbaren Steuerungen zu integrieren. Es besteht jedoch immer noch eine hohe Abhängigkeit im Hinblick auf die Kompatibilität der Hardware 12 zu dem Hypervisor 18. Hinzu kommen die bereits vorstehend beschriebenen Nachteile, die durch die vergleichsweise strikte Trennung des echtzeitfähigen Betriebssystems 14 von dem nicht echtzeitfähigen Betriebssystem 16 erzeugt werden.

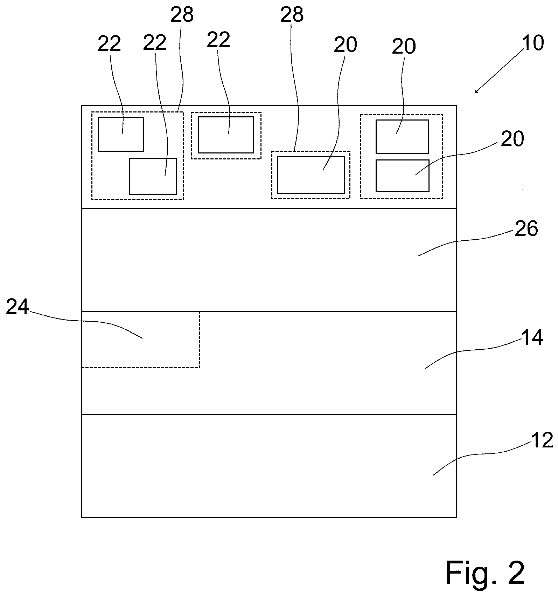

In Figur 2 ist eine beispielhafte Software-Architektur eines Computers 10 eines beispielhaften erfindungsgemäßen Automatisierungssystems schematisch dargestellt. Auch bei dieser Architektur bildet die Hardware 12 des Computers 10 die unterste Schicht. Dieser überlagert ist ein echtzeitfähiges Betriebssystem 14. Bei diesem echtzeitfähigen Betriebssystem 14 kann es sich insbesondere um ein Linux-Betriebssystem handeln, das beispielsweise mittels einer geeigneten Erweiterung 24 (zum Beispiel einem sogenannten "PREEMPT_RT patch") über die notwendige Echtzeitfähigkeit verfügt. Der Schicht des echtzeitfähigen Betriebssystems 14 überlagert ist eine Laufzeitumgebung 26. Diese stellt das Bindeglied zwischen der Anwendungsschicht mit Echtzeitprogrammen 20 und nicht-Echtzeitprogrammen 22 und dem echtzeitfähigen Betriebssystem 14 dar. Die Echtzeitprogramme 20 und die nicht-Echtzeitprogramme 22 werden in der Laufzeitumgebung 26 ausgeführt.

Während der Durchführung eines Verfahrens zur Steuerung und/oder Überwachung eines Automatisierungssystems einer Maschine und/oder Anlage führt der Computer 10 Funktionen des Automatisierungssystems durch Programme 20, 22, insbesondere durch die Echtzeitprogramme 20 aus.

Im Rahmen eines derartigen Verfahrens erfolgt die Zuteilung der Ressourcen des Computers 10, insbesondere der Hardware 12 insbesondere derart, dass sichergestellt ist, dass den Echtzeitprogrammen 20 hinreichende Ressourcen für die Erfüllung der jeweiligen Echtzeitanforderungen zur Verfügung stehen. Insbesondere wird durch die Laufzeitumgebung 26 die Priorität der Abarbeitung der Programme 20, 22 festgelegt.

Insbesondere werden die Echtzeitprogramme 20 und die nicht-Echtzeitprogramme 22 in Sandboxen 28 ausgeführt. Dabei ist es möglich, jedes Programm 20 oder 22 in einer eigenen Sandbox 28 auszuführen. Es können jedoch auch eine Mehrzahl Programme 20, 22 in einer gemeinsamen Sandbox 28 ausgeführt werden.

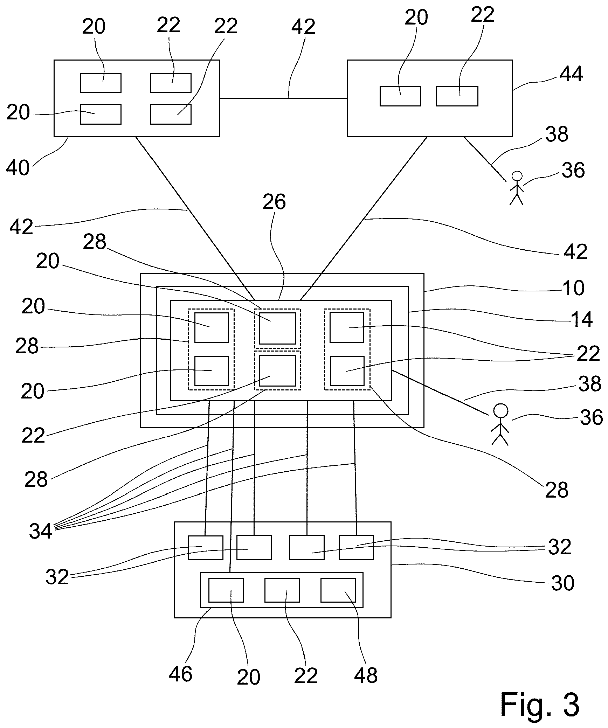

In Figur 3 ist ein beispielhaftes Automatisierungssystem für eine Maschine und/oder Anlage 30 dargestellt. Das Automatisierungssystem umfasst einen Computer 10 mit einem echtzeitfähigen Betriebssystem 14, dem wiederum eine Laufzeitumgebung 26 überlagert ist.

Peripheriegeräte 32 sind über Datenverbindungen 34 mit dem Computer 10 verbunden. Diese Datenleitungen ermöglichen die Kommunikation zwischen den Programmen 20, 22 einerseits und den Peripheriegeräten 32 andererseits. Bei den Peripheriegeräten handelt es sich insbesondere um Feldgeräte wie Aktoren und/oder Sensoren. Beispielsweise kann es sich um elektrische Antriebe handeln, die insbesondere mittels Frequenzumrichtern mit elektrischer Energie versorgt und gesteuert werden. Die Kommunikation kann über die Datenverbindungen nach der OPC-UA-Spezifikation erfolgen. Dabei wird die Kommunikation zwischen den Programmen 20, 22 einerseits und den Peripheriegeräten 32 andererseits insbesondere durch die Laufzeitumgebung 26 kontrolliert.

Das System kann eine Kommunikation zwischen einem Nutzer 36 und über eine Benutzerschnittstelle 38 ermöglichen. Die Benutzerschnittstelle 38 kann insbesondere Dateneingabe- und/oder Datenausgabegeräte, wie beispielsweise einen Bildschirm, einen Drucker, eine Tastatur und/oder ein Zeigegerät wie beispielsweise eine Maus und/oder einen berührungsempfindlichen Bildschirm umfassen. Die Benutzerschnittstelle 38 stellt hierbei insbesondere einen Bestandteil der Hardware 12 dar. Auf diese Weise wird es einem Nutzer 36 ermöglicht, aktiv Einfluss auf das Automatisierungssystem zu nehmen und insbesondere ein Verfahren zur Steuerung und/oder Überwachung des Automatisierungssystems mittels des Computers 10 unmittelbar zu beeinflussen.

Programme 20, 22 können durch ein Computersystem 40 über eine Datenverbindung 42 bereitgestellt werden. Die Bereitstellung der Programme 20, 22 erfolgt insbesondere nach Art eines Software-Stores, von dem die Programme 20, 22 über die Datenverbindung 42 von der Laufzeitumgebung 26 abgerufen bzw. bezogen werden können. Die Laufzeitumgebung 26 kann in diesem Zusammenhang insbesondere über eine geeignete Paketverwaltung verfügen, mittels derer die Installation der Programme auf dem Computer 10 durch die Laufzeitumgebung 26 kontrolliert wird.

Alternativ und/oder ergänzend kann eine integrierte Entwicklungsumgebung 44 bereitgestellt werden, die es einem Nutzer 36 über eine Benutzerschnittstelle 38 ermöglicht, Programme 20, 22 zu erstellen und/oder zu verändern. Die integrierte Entwicklungsumgebung 44 kann insbesondere räumlich getrennt vom Computer 10 und/oder vom Computersystem 40 bereitgestellt werden. Es kann sich folglich bei der Benutzerumgebung 44 um eine Software handeln, die auf einem beliebigen anderen Computer ausgeführt wird. Auf diese Weise wird es Nutzern 36 in komfortabler Weise ermöglicht, beispielsweise vom Büro eines Entwicklungsingenieurs aus neue Programme 20, 22 für den Betrieb des Automatisierungssystems zur Verfügung zu stellen. Datenverbindungen 42 können die integrierte Entwicklungsumgebung, beispielsweise über das Internet und/oder über ein Intranet mit dem Computer 10 und/oder einem Computersystem 40 verbinden.

Weiterhin ist es möglich, dass die Maschine und/oder Anlage 30 ein Identifikationsmodul 46 aufweist. Dieses ist insbesondere ebenfalls über eine Datenverbindung 34 mit dem Computer 10 verbunden. Dabei wird die Datenverbindung 34 des Computers 10 mit dem Identifikationsmodul 46 insbesondere ebenfalls von der Laufzeitumgebung 26 kontrolliert. Das Identifikationsmodul 46 kann geeignete Datenträger mit gespeicherten Echtzeitprogrammen 20, nicht-Echtzeitprogrammen 22 und/oder die Anlage und/oder Maschine betreffenden Daten 48 enthalten. Auf diese Weise ist es möglich, dass eine Identifizierung der Maschine und/oder Anlage 30 durch den Computer 10 erfolgt. Für das Verfahren zur Steuerung und/oder Überwachung des Automatisierungssystems der Maschine und/oder Anlage 30 benötigten Programme 20, 22 können dann beispielsweise über eine Datenverbindung 42 von einem Computersystem 40 getrennt bezogen werden. Alternativ und/oder ergänzend können die Programme jedoch bereits auch mittels des Identifikationsmoduls 46 der Maschine und/oder Anlage 30 zur Verfügung gestellt werden. Auf diese Weise lässt sich nach dem Herstellen der Datenverbindungen 34 zwischen den der Maschine und/oder Anlage 30 zugeordneten Bestandteilen des Automatisierungssystems und dem Computer 10 eine Inbetriebnahme des Automatisierungssystems nach dem "Plug-and-Play"-Prinzip realisieren.

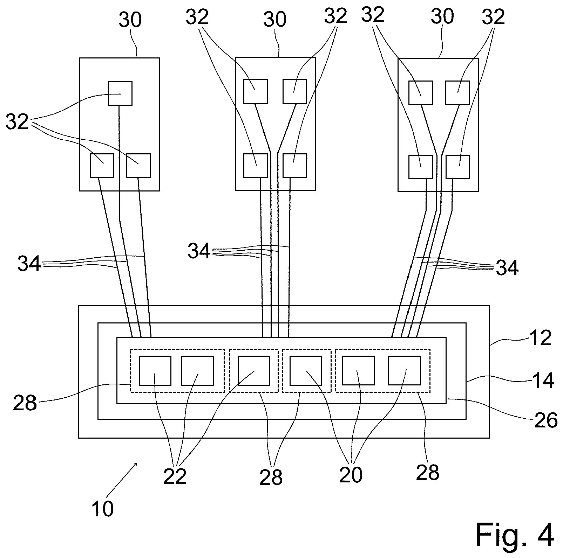

Ein derartiges Automatisierungssystem weist eine hohe Variabilität auf. So können, wie beispielhaft in Figur 4 dargestellt, Automatisierungssysteme realisiert werden, die Peripheriegeräte 32 einer Mehrzahl Maschinen und/oder Anlagen 30 umfassen. Diese Peripheriegeräte 32 können sämtlich mit einem einzigen Computer 10 verbunden sein, ein so gebildetes Automatisierungssystem lässt sich in vorteilhafter Weise an veränderte Anforderungen anpassen, insbesondere können einzelne Programme 20, 22 in einfacher Weise ergänzt, ersetzt und/oder aktualisiert werden. Ebenfalls ist ein Austausch der Hardware 12 des Computers 10 vergleichsweise einfach, da die Laufzeitumgebung 26 die Verwendung verbreiteter, echtzeitfähiger Betriebssysteme, wie beispielsweise einem Linux-Betriebssystem, ermöglicht. Daraus resultiert eine hohe Flexibilität bei der Auswahl der Hardware 12 des Computers 10. Auch ist es vergleichsweise einfach möglich, Peripheriegeräte 32 - und damit auch weitere Maschinen und/oder Anlagen 30 - nachträglich in das Automatisierungssystem einzubinden bzw. aus diesem zu entfernen und/oder auszutauschen. Durch die so geschaffene Modularität des Systems lassen sich die Lifecycle-Kosten eines solchen Automatisierungssystems gegenüber herkömmlichen Lösungen, bei denen sich entsprechende Anpassungen vergleichsweise schwierig gestalten, reduzieren.

### Bezugszeichenliste

- 10: Computer
- 12: Hardware
- 14: echtzeitfähiges Betriebssystem
- 16: nicht-echtzeitfähiges Betriebssystem
- 18: Hypervisor
- 20: echtzeitfähiges Programm
- 22: nicht-echtzeitfähiges Programm
- 24: Erweiterung
- 26: Laufzeitumgebung
- 28: Sandbox
- 30: Anlage/Maschine
- 32: Peripheriegeräte
- 34: Datenverbindung
- 36: Nutzer
- 38: Benutzerschnittstelle
- 40: Computersystem
- 42: Datenverbindung
- 44: Entwicklungsumgebung
- 46: Identifikationsmodul
- 48: Daten

## Patentansprüche

1. Verfahren zur Steuerung und/oder Überwachung eines Automatisierungssystems einer Maschine und/oder Anlage (30), wobei Funktionen des Automatisierungssystems mittels eines Computers (10) gesteuert werden,
wobei die Steuerung durch Programme (20, 22) erfolgt, die auf dem Computer (10) ausgeführt werden,
wobei der Computer (10) ein echtzeitfähiges Betriebssystem (14), insbesondere ein echtzeitfähiges Linux-Betriebssystem, aufweist,
wobei die Programme sowohl Echtzeit-Programme (20), als auch Nicht-Echtzeit-Programme (22) umfassen, die in einer dem Betriebssystem (14, 16) übergeordneten Laufzeitumgebung (26) ausgeführt werden, wobei die Laufzeitumgebung (26) als zwischen den Programmen und dem Betriebssystem liegende Schicht in der dem Verfahren zugrunde liegenden Software-Architektur eingesetzt wird,
wobei wenigstens eines der Echtzeit-Programme (20) bei der Ausführung des Verfahrens die Bewegung, Bewegungsgeschwindigkeit und/oder Position eines elektrischen Antriebssystems steuert,
wobei eine Zuteilung der Ressourcen des Computers (10) derart erfolgt, dass sichergestellt ist, dass den Echtzeit-Programmen (20) hinreichende Ressourcen für die Erfüllung der jeweiligen Echtzeitanforderungen zur Verfügung stehen,
wobei die Echtzeit-Programme (20) durch die Laufzeitumgebung (26) zyklischen Zeitscheiben zugewiesen werden, die in Echtzeit abgearbeitet werden,
wobei durch die Laufzeitumgebung geeignete Zeitpunkte ermittelt werden, zu denen die Abarbeitung der nicht Echtzeit-Programme erfolgen kann, ohne die Abarbeitung der Echtzeit-Programme in Echtzeit zu beeinträchtigen.

2. Verfahren nach Anspruch 1, **dadurch gekennzeichnet, dass** die Programme in Sandboxen (28) ausgeführt werden, insbesondere wobei jedes Programm (20, 22) in einer eigenen Sandbox (28) ausgeführt werden kann.

3. Verfahren nach einem der vorigen Ansprüche, **dadurch gekennzeichnet, dass** die Programme (20, 22) untereinander durch ein Message-Passing-System, insbesondere mittels eines Publish-Subscribe Messaging Patterns, kommunizieren.

4. Verfahren nach einem der vorigen Ansprüche, **dadurch gekennzeichnet, dass** die Programme (20, 22) mit Peripheriegeräten (32) zur Ausführung von Steuerungsfunktionen kommunizieren, insbesondere wobei die Kommunikation über eine service-orientierte Kommunikationsarchitektur, insbesondere nach der OPC UA - Spezifikation erfolgt.

5. Verfahren nach einem der vorigen Ansprüche, **dadurch gekennzeichnet, dass** von einem Computersystem (40) über eine Datenverbindung (42) in der Laufzeitumgebung (26) ausführbare Programme (20, 22) bereitgestellt werden.

6. Verfahren nach einem der vorigen Ansprüche, **dadurch gekennzeichnet, dass** eine integrierte Entwicklungsumgebung (44) bereitgestellt wird, die die Erstellung von in der Laufzeitumgebung (26) ausführbaren Programmen (20, 22) unterstützt.

7. Verfahren nach einem der vorigen Ansprüche, **dadurch gekennzeichnet, dass** Programmbestandteile, die von einer Mehrzahl Programme (20, 22) benutzt werden, in einer Mehrzahl Kopien auf einem nicht-flüchtigen Speicher gespeichert werden, insbesondere wobei auf jede Kopie des Programmbestandteils lediglich durch ein bestimmtes Programm (20, 22) zugegriffen wird.

8. Verfahren nach einem der vorigen Ansprüche, **dadurch gekennzeichnet, dass** wenigstens eines der Echtzeit-Programme (20) bei der Ausführung des Verfahrens Positionen, Bewegungen und/oder Bewegungsgeschwindigkeiten einer Mehrzahl durch elektrische Antriebssysteme angetriebener Achsen aufeinander abstimmt.

9. Automatisierungssystem für die Steuerung und/oder Überwachung einer Maschine oder Anlage (30) nach einem Verfahren nach einem der vorigen Ansprüche,
wobei das Automatisierungssystem eine Mehrzahl über Datenverbindungen (44) mit einem Computer (10) verbundene Peripheriegeräte (32) zur Ausführung von Automatisierungsfunktionen aufweist, wobei der Computer (10) ein echtzeitfähiges Betriebssystem (14), insbesondere ein echtzeitfähiges Linux-Betriebssystem, aufweist,
wobei das Automatisierungssystem Programme (20, 22) zur Steuerung der Ausführung der Automatisierungsfunktionen durch die Peripheriegeräte (32) aufweist, die in einer dem Betriebssystem (14, 16) übergeordneten Laufzeitumgebung (26) ausführbar sind,
wobei die Programme sowohl Echtzeit-Programme (20) als auch Nicht-Echtzeit-Programme (22) umfassen.

10. Automatisierungssystem nach Anspruch 9, **dadurch gekennzeichnet, dass** das Automatisierungssystem Identifikationsmodule (46) umfasst, die über eine Datenverbindung (44) mit dem Computer (10) verbindbar sind, um benötigte Programme (20, 22) zu identifizieren und/oder bereitzustellen.

11. Automatisierungssystem nach Anspruch 9oder 10, **dadurch gekennzeichnet, dass** das das Steuerungssystem Peripheriegeräte (32) einer Mehrzahl Maschinen (30) umfasst.

## Claims

1. Method for controlling and/or monitoring an automation system of a machine and/or installation (30), wherein functions of the automation system are controlled by a computer (10),
wherein control is executed by programs (20, 22) that are executed on the computer (10),
wherein the computer (10) is equipped with a real-time-capable operating system (14), in particular a real-time-capable Linux operating system,
wherein the programs include both real-time programs (20) and non-real-time programs (22) which are executed in a runtime environment (26) that is superordinate to the operating system (14, 16), wherein the runtime environment (26) is used as a layer between the programs and the operating system in the software architecture which the method is based on,
wherein least one of the real-time programs (20) controls the movement, movement speed and/or position of an electrical drive system while executing the method,
wherein the resources of the computer (10) are allocated in such a manner that it is made sure that the real-time programs (20) have sufficient resources to meet the respective real-time requirements,
wherein the real-time programs (20) are assigned to cyclical time slices by the runtime environment (26), which time slices are processed in real time,
wherein the runtime environment determines suitable points in time at which the non-real-time programs can be processed without negatively impacting the real-time processing of the real-time programs.

2. Method according to Claim 1, **characterized in that** the programs are executed in sandboxes (28), wherein, in particular, each program (20, 22) can be executed in its own sandbox (28).

3. Method according to one of the preceding claims, **characterized in that** the programs (20, 22) communicate with each other via a message passing system, in particular, using a publish-subscribe message pattern.

4. Method according to one of the preceding claims, **characterized in that** the programs (20, 22) communicate with peripheral devices (32) to execute control functions, wherein, in particular, communication is executed via a service-oriented communications structure, in particular, according to the OPC UA specification.

5. Method according to one of the preceding claims, **characterized in that** programs (20, 22) executable in the runtime environment (26) are provided by a computer system (40) via a data link (42).

6. Method according to one of the preceding claims, **characterized in that** an integrated development environment (44) is provided that supports the creation of programs (20, 22) executable in the runtime environment (26).

7. Method according to one of the preceding claims, **characterized in that** multiple copies of program components that are used by multiple programs (20, 22) are stored in a non-volatile memory, wherein, in particular, each copy of the program component is only accessed by a specific program (20, 22).

8. Method according to one of the preceding claims, **characterized in that** while executing the method, at least one of the real-time programs (20) coordinates the positions, movements and/or movement speeds of multiple axes driven by electrical drive systems.

9. Automation system for controlling and/or monitoring a machine or installation (30) according to a method according to one of the preceding claims,
wherein the automation system is equipped with multiple peripheral devices (32), connected to a computer (10) via data links (42), to execute automation functions, wherein the computer (10) is equipped with a real-time-capable operating system (14), in particular a real-time-capable Linux operating system,
wherein the automation system is equipped with programs (20, 22) for controlling the execution of the automation functions by the peripheral devices (32) which programs can be executed in a runtime environment (26) that is superordinate to the operating system (14, 16),
wherein the programs include both real-time programs (20) and non-real-time programs (22).

10. Automation system according to Claim 9, **characterized in that** the automation system includes identification modules (46) connectable to the computer (10) via a data link (42) to identify and/or provide required programs (20, 22).

11. Automation system according to Claim 9 or 10, **characterized in that** the control system includes peripheral devices (32) of multiple machines (30).

## Revendications

1. Procédé de commande et/ou de surveillance d'un système d'automatisation d'une machine et/ou d'une installation (30), les fonctions du système d'automatisation étant commandées au moyen d'un ordinateur (10),
la commande s'effectuant par l'intermédiaire de programmes (20, 22) qui sont exécutés sur l'ordinateur (10),
l'ordinateur (10) comportant un système d'exploitation en temps réel (14), en particulier un système d'exploitation Linux en temps réel,
les programmes comprenant à la fois des programmes en temps réel (20) et des programmes non en temps réel (22), qui sont exécutés dans un environnement d'exécution (26) qui est supérieur au système d'exploitation (14, 16),
l'environnement d'exécution (26) étant utilisé comme une couche se trouvant entre les programmes et le système d'exploitation dans l'architecture logicielle sous-jacente au procédé,
au moins l'un des programmes en temps réel (20) commandant le déplacement, la vitesse de déplacement et/ou la position d'un système d'entraînement électrique lors de l'exécution du procédé,
une allocation des ressources de l'ordinateur (10) étant effectuée de manière à garantir que des ressources suffisantes soient mises à la disposition des programmes en temps réel (20) pour la satisfaction des exigences respectives en temps réel,
les programmes en temps réel (20) étant affectés par l'environnement d'exécution (26) à des tranches de temps cycliques qui sont traitées en temps réel,
l'environnement d'exécution déterminant des moments appropriés lors desquels le traitement des programmes non en temps réel peut avoir lieu, sans affecter le traitement en temps réel des programmes en temps réel.

2. Procédé selon la revendication 1, **caractérisé en ce que** les programmes sont exécutés dans des bacs à sable (28), chaque programme (20, 22) pouvant notamment être exécuté dans son propre bac à sable (28).

3. Procédé selon l'une quelconque des revendications précédentes, **caractérisé en ce que** les programmes (20, 22) communiquent entre eux par l'intermédiaire d'un système de passage de messages, en particulier au moyen d'un modèle de messagerie de type publication-abonnement.

4. Procédé selon l'une quelconque des revendications précédentes, **caractérisé en ce que** les programmes (20, 22) communiquent avec des périphériques (32) pour l'exécution de fonctions de commande, en particulier la communication s'effectuant par l'intermédiaire d'une architecture de communication orientée services, en particulier selon la spécification OPC UA.

5. Procédé selon l'une quelconque des revendications précédentes, **caractérisé en ce que** des programmes (20, 22) exécutables dans l'environnement d'exécution (26) sont fournis par un système informatique (40) par l'intermédiaire d'une connexion de données (42).

6. Procédé selon l'une quelconque des revendications précédentes, **caractérisé en ce qu'**il est prévu un environnement de développement intégré (44) qui prend en charge la création de programmes (20, 22) exécutables dans l'environnement d'exécution (26).

7. Procédé selon l'une quelconque des revendications précédentes, **caractérisé en ce que** des composants de programme, qui sont utilisés par une pluralité de programmes (20, 22), sont stockés en une pluralité de copies sur une mémoire non volatile, un accès à chaque copie du composant de programme étant notamment effectué uniquement par un programme (20, 22) spécifique.

8. Procédé selon l'une quelconque des revendications précédentes, **caractérisé en ce qu'**au moins l'un des programmes en temps réel (20) coordonne les positions, les déplacements et/ou les vitesses de déplacement d'une pluralité d'axes entraînés par des systèmes d'entraînement électriques lors de l'exécution du procédé.

9. Système d'automatisation pour la commande et/ou la surveillance d'une machine ou d'une installation (30) conformément à un procédé selon l'une quelconque des revendications précédentes,
le système d'automatisation comprenant une pluralité de périphériques (32) connectés à un ordinateur (10) par l'intermédiaire de connexions de données (44) pour l'exécution de fonctions d'automatisation, l'ordinateur (10) comportant un système d'exploitation en temps réel (14), en particulier un système d'exploitation Linux en temps réel,
le système d'automatisation comprenant des programmes (20, 22) pour la commande de l'exécution des fonctions d'automatisation par les périphériques (32), lesquels sont exécutables dans un environnement d'exécution (26) qui est supérieur au système d'exploitation (14, 16),
les programmes comprenant à la fois des programmes en temps réel (20) et des programmes non en temps réel (22).

10. Système d'automatisation selon la revendication 9, **caractérisé en ce que** le système d'automatisation comprend des modules d'identification (46) qui peuvent être connectés à l'ordinateur (10) par l'intermédiaire d'une connexion de données (44) pour identifier et/ou fournir les programmes (20, 22) nécessaires.

11. Système d'automatisation selon la revendication 9 ou 10, **caractérisé en ce que** le système de commande comprend des périphériques (32) d'une pluralité de machines (30).
